# EUROPEAN PATENT SPECIFICATION

(11) **EP 1 349 892 B1**
(45) Date of publication and mention of the grant of the patent: **11.07.2007**
(21) Application number: 01990745.0
(22) Date of filing: 29.11.2001
(51) Int. Cl.: C08L 27/12, C08K 5/54, C08F 8/42, B32B 27/30, C08J 3/24, C08J 7/04, C08F 14/18, C08F 8/18

(54) **COMPOSITION FOR MAKING A FLUOROELASTOMER**
ZUSAMMENSETZUNG ZUR HERSTELLUNG EINES FLUORELASTOMERS
COMPOSITION DE FABRICATION D'UN FLUOROELASTOMERE

(30) Priority: 01.12.2000 US 250457 P; 31.10.2001 US 336474 P
(43) Date of publication of application: 08.10.2003
(73) Proprietor: 3M Innovative Properties Company, St. Paul, MN 55133-3427 (US)
(72) Inventor: HARE, Erik, D., Saint Paul, MN 55133-3427 (US); COGGIO, William, D., Saint Paul, MN 55133-3427 (US); HINTZER, Klaus, Saint Paul, MN 55133-3427 (US); KOLB, Robert, E., Saint Paul, MN 55133-3427 (US); SCOTT, Peter, J., Saint Paul, MN 55133-3427 (US); VERSCHUERE, Alain, Saint Paul, MN 55133-3427 (US); KASPAR, Harald, Saint Paul, MN 55133-3427 (US)
(74) Representative: Kurz, Arnd
(86) International application number: PCT/US2001/044529
(87) International publication number: WO 2002/044265

(56) References cited:
- EP-A- 0 761 735
- EP-A- 0 769 521
- DE-A- 4 224 559

## Description

### Field

The present invention relates to a composition for making a fluoroelastomer. In particular, the present invention relates to a composition for making a fluoroelastomer, which composition includes an organic compound having one or more hydride functions -SiH. The invention further relates to fluoroelastomers that can be obtained with such a composition

### Background

Fluoroelastomers and in particular perfluoroelastomers such as those described in "Modern Fluoropolymers", edited by John Scheirs, Wiley Science 1997, offer excellent protection against high service temperatures and are resistant to a wide variety of chemical reagents. Because they have excellent heat resistance and oil resistance, fluoroelastomers have been used in the past for O-rings, gaskets, oil seals, diaphragms, hoses, rolls, sheeting materials, in a variety of industrial applications which include automobiles, boats, aircraft, hydraulic machinery, general machinery, and in fields related to prevention of pollution. In the automotive field, the heat resistance and oil resistance of fluoroelastomers are commonly utilised in fuel management systems. Parts of the fuel management systems in which fluoroelastomers are often used include fuel tanks, fuel hoses, in-tank hoses and filler hoses.

Fluoroelastomers are typically obtained by curing a generally amorphous fluoropolymer. Two main systems are known today to effect curing of fluoropolymers, i.e. polymers that have a partially or fully fluorinated backbone. One cure system is based on the use of a polyhydroxy compound generally in combination with an onium compound. The second well known cure system is based on a peroxide cure reaction and requires besides the presence of an organic peroxide also the presence of special cure sites in the fluoropolymer which makes the fluoroelastomers obtained with a peroxide cure system generally more expensive than a cure system based on polyhydroxy compounds. These special cure sites comprise bromine and/or iodine which is capable of participating in the organic peroxide cure reaction. It is generally believed that such bromine or iodine atoms are abstracted in the free radical peroxide cure reaction, thereby causing in the presence of coagents, the fluoropolymer molecules being linked together to a three dimensional network. Chlorine is generally not capable of being abstracted in such a reaction and has so far not been used as a cure site for a peroxide cure system.

For example, EP 761735 describes curable fluoroelastomer compositions that require the presence of bromine in the fluoropolymer in order to obtain a peroxide curable system. In particular, EP 761735 teaches that the cure reaction involving homolytic scission of C-Br bonds can be accelerated by using certain metalorganic hydrides. EP 761735 does not appreciate the possibility of using chlorine as a cure site.

A disadvantage of the so called peroxide cure systems is that they require the presence of bromine or iodine in the fluoropolymer which leads to inconveniences in the manufacturing of such fluoropolymer and generally increases costs of such fluoropolymers. On the other hand, polyhydroxy cure systems do not require the presence of bromine or iodine but suffer from the disadvantage that some of the physical properties and thermal properties of the resulting fluoroelastomer may be inferior to those of the peroxide cure system.

It would now be desirable to find a further cure system for curing fluoropolymers and to make fluoroelastomers. Desirably, such a cure system would allow producing fluoroelastomers in a convenient and cost effective way. Desirably, the fluoroelastomers produced with the new cure system have similar or improved physical and mechanical properties as fluoroelastomers produced with cure systems of the prior art in particular compared with fluoroelastomers obtained with the known peroxide cure system.

### Summary

In accordance with the present invention, it was found that by including an organic compound which is a siloxane having one or more - SiH functions, a fluoropolymer containing chlorine in an amount of 0.01% to 15% by weight can be cured using a free radical generating compound. The free radical generating compound is typically an organic peroxide but other free radical generating compounds such as azo compounds can be used also. In particular, it was found that in the presence of the organic compound, the chlorine atoms of the fluoropolymer are capable of participating in a free radical cure reaction, such as for example in a peroxide cure reaction, whereas in absence of the organic compound the chlorine atoms were not able to participate in a peroxide cure reaction. Therefore, even fluoropolymers that do not include bromine or iodine can be cured according to the present invention. As a result, fluoroelastomers with excellent physical and mechanical properties can be obtained generally in a cost effective and convenient way. Additionally, the fluoroelastomers can be readily bonded to a variety of substrates including for example silicone rubbers, non-fluorinated elastomers, metal substrates and fluorothermoplastic substrates such as fluorothermoplastic barrier layers that are used in fuel management systems.

Thus, in one aspect, the present invention relates to a composition for making a fluoroelastomer comprising chlorine containing fluoropolymer and the organic compound having one or more hydride functions -SiH. The chlorine containing fluoropolymer is a polymer that has a partially or fully fluorinated backbone and that further comprises chlorine. The chlorine atoms may be attached to the backbone, be present in an end group of the polymer or they may be present in a side group of the polymer. Typically, the chlorine atoms are attached to a carbon atom of the fluoropolymer. The amount of chlorine contained in the fluoropolymer is between 0.01% by weight and 15% by weight based on the weight of the fluoropolymer. Further, the fluoropolymer will generally be an amorphous or substantially amorphous fluoropolymer and the fluoropolymer may have a monomolecular weight distribution as well as a multimodal molecular weight distribution, e.g. a bimodal molecular weight distribution. By "amorphous or substantially amorphous" is meant that the polymer does not display or marginally displays a melting point such that upon curing an elastomeric polymer can be obtained. Alternatively, it may also be possible to obtain a fluoropolymer upon curing of semi-crystalline fluoropolymers that have a melting point of less than 100°C.

The composition may further include a polyhydroxy compound. Such composition has the advantage that it can be cured by two curing mechanisms allowing for more flexibility in that the benefits of both cure systems can be combined into one composition. In particular, the bonding properties to other substrates can be improved with such a dual cure system.

A curable composition, which upon curing provides a fluoroelastomer is typically obtained by including in the aforementioned composition a free radical generating compound and a coagent that has one or more groups capable of participating in a free radical curing reaction. Typically, such a coagent is an unsaturated compound that has one or more unsaturated groups such as ethylenically unsaturated groups.

A fluoroelastomer can be obtained from a curable fluoroelastomer composition by heating the composition while optionally applying pressure. Preferably, the curable composition is prepared only shortly before curing from a premix. According to a further aspect of the present invention, a premix is also provided which comprises the fluoropolymer containing chlorine, the organic compound having MH functions and whereby a curable composition can be obtained from the premix by adding an organic peroxide thereto. Such a premix offers the advantage of generally good storage stability and further offers the advantage that a curable composition can be prepared in a reproducible and convenient way by adding organic peroxide to the premix.

As mentioned above, the present invention provides for the possibility of using chlorine atoms on a fluoropolymer as cure sites in a free radical cure reaction such as a peroxide cure reaction. Accordingly in another aspect, the present invention relates to the use of chlorine atoms of a chlorine containing fluoropolymer as cure sites in a free radical cure reaction to obtain a cured fluoroelastomer composition from a curable fluoroelastomer composition that contains the chlorine containing fluoropolymer, a free radical generating compound, a compound having one or more groups capable of participating in a free radical cure reaction and the siloxane having one or more hydride functions -SiH. A method for producing such a fluoropolymer comprises the polymerization of one or more fluorinated monomers optionally in combination with one or more non-fluorinated monomers whereby the polymerization is initiated with a chlorine containing initiator and/or is initiated in the presence of a chlorine source such as for example a chloride salt.

### Detailed Description

The organic compound having one or more hydride functions -SiH may be a simple organic compound or can be a polymeric compound. By "polymeric compound" is meant that the compound comprises repeating units that are actually or conceptually derived from lower molecular weight compounds, i.e. monomers. The polymerization degree may vary widely and includes a low polymerization degree such as for example a polymerization degree of 2 to 50 repeating units as well as a large polymerization degree of more than 50. Thus, the term "polymeric compound" should be understood to include oligomeric compounds that typically have a low polymerization degree. If the organic compound is polymeric, the hydride function may be contained in the terminating group of the polymeric chain and/or in a repeating unit of the polymeric compound.

The organic compound having one or more -SiH functions is typically a non-fluorinated compound although the possibility of using an organic compound that has fluorine substituents is not excluded.

Preferably, the SiH function will be an -OSiH or a -NSiH whereby the hydrogen is attached to a silicon atom that is further bonded to an oxygen or nitrogen atom. The siloxane of silazene may be a simple low molecular weight organic compound or may be a polymeric compound including for example a polysiloxane which may be linear, branched or cyclic.

Examples of low molecular weight siloxanes include for example alkoxy silanes corresponding to the formula:

(R^{a})ₛ(R^{b}O)ₜSiH_{w}, (I)

wherein each R^{a} independently represents an alkyl group such as for example methyl or ethyl or another lower alkyl (C₁-C₇ alkyl group) or an alkyl group substituted with a substituent such as for example an aryl group, an ester, an alkoxy etc., or aryl group optionally substituted such as for example with an alkyl group, an ester, an alkoxy etc., each R^{b} independently represents an alkyl group, preferably a lower alkyl group and which may optionally be substituted, t and w represent an integer of at least 1 and the sum of s+t+w being 4. Examples of siloxanes according to the above formula include HSi(OCH₂CH₃)₃ and (CH₃)₂(CH₃CH₂O)SiH.

In accordance with another embodiment in connection with the present invention, the organic compound is a polysiloxane (oligomer or polymer), comprising a polysiloxy backbone. Such polymer or oligomer may be terminated by a group containing one or more SiH functions and/or may contain SiH groups distributed along the backbone. The SiH groups may form part of the backbone or they can be present in a side group attached to the backbone.

For example, the polysiloxanes for use with this invention include those that correspond to the formula: 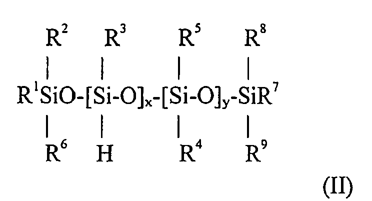 wherein R¹, R², R³, R⁶, R⁷, R⁸ and R⁹ each independently represents hydrogen, an alkoxy group, an alkyl optionally substituted such as for example with an aryl group, an ester, an alkoxy etc., or aryl group optionally substituted such as for example with an alkyl group, an ester, an alkoxy etc., R⁴ and R⁵ each independently represents an alkoxy group, an alkyl or aryl group each of which may optionally be substituted, x represents a value of 0 to 150, y represents a value of 0 to 150 and with the proviso that when x=0, at least one of R¹, R², R⁶, R⁷, R⁸ and R⁹ represents a hydrogen atom.

Specific examples of siloxanes include 1,1,3,3 tetraisopropyl disiloxane, diphenyl-1,1,3,3-tetrakis(dimethylsiloxy)disiloxane available from United Chem, silylhydride terminated poly(dimethylsiloxane), poly(methyl hydro siloxane) and copolymers of dimethylsiloxane and methylhydrosiloxane.

Further siloxanes that can be used may be cyclic such as those corresponding to the formula: 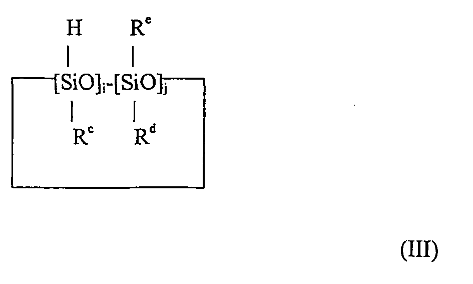 wherein R^{c} represents hydrogen, an alkyl group or an aryl group, R^{d} and R^{e} each independently represents an alkyl or aryl group, i is at least 1 and the sum of i+j is at least 3. Specific examples of cyclic siloxanes according to the above formula are 1,3,5-trimethyl cyclosiloxane and 1-phenyl-3,3,5,5-tetramethyl cyclosiloxane.

Polysiloxanes and siloxanes having SiH groups are known in the art and can be produced according to well-known procedures such as disclosed in for example: Encyclopedia of Polymer Science and Engineering, Second Edition, V15, Silicones, pgs. 204-308, John Wiley & Sons, 1989. Siloxanes having SiH groups are also generally commercially available. Preferably, the siloxane or polysiloxane will have a molecular weight between 150g/mol and 10 000g/mol.

The amount of organic compound used in a composition for preparing a fluoroelastomer may vary widely and the optimal amount can be readily determined by one skilled in the art through routine experimentation. Typically, an amount of 0.01% by weight to 5% by weight, preferably between 0.1% by weight and 4% by weight based on the weight of fluoropolymer is included in the composition.

The fluoropolymer of the composition for making the fluoroelastomer is chlorine containing and may have a partially or fully fluorinated backbone. Particularly preferred fluoropolymers are those that have a backbone that is at least 20% by weight fluorinated, preferably at least 40% by weight fluorinated, more preferably at least 65% by weight fluorinated.

Examples of fluoropolymers for use in this invention include polymers of one or more fluorinated monomers optionally in combination with one or more non-fluorinated monomers. Examples of fluorinated monomers include fluorinated C₂-C₈ olefins such as tetrafluoroethylene (TFE), vinyl fluoride, vinylidene fluoride (VDF) and fluorinated alkyl vinyl monomers such as hexafluoropropylene (HFP); fluorinated vinyl ethers, including perfluorinated vinyl ethers (PVE) and fluorinated allyl ethers including perfluorinated allyl ethers. Suitable non-fluorinated comonomers include and C₂-C₈ olefins such as ethylene (E) and propylene (P).

Examples of perfluorovinyl ethers that can be used in the invention include those that correspond to the formula:

CF₂=CF-O-R_{f}

wherein R_{f} represents a perfluorinated aliphatic group that may contain one or more oxygen atoms.

Particularly preferred perfluorinated vinyl ethers correspond to the formula:

CF₂=CFO(R^{a}_{f}O)ₙ (R^{b}_{f}O)ₘR^{c}_{f}

wherein R^{a}_{f} and R^{b}_{f} are different linear or branched perfluoroalkylene groups of 1-6 carbon atoms, in particular 2 to 6 carbon atoms, m and n are independently 0-10 and R^{c}_{f} is a perfluoroalkyl group of 1-6 carbon atoms. Specific examples of perfluorinated vinyl ethers include perfluoro (methyl vinyl) ether (PMVE), perfluoro (ethyl vinyl) ether (PEVE), perfluoro (n-propyl vinyl) ether (PPVE-1), perfluoro-2-propoxypropylvinyl ether (PPVE-2), perfluoro-3-methoxy-n-propylvinyl ether, perfluoro-2-methoxy-ethylvinyl ether and CF₃-(CF₂)₂-O-CF(CF₃)-CF₂-O-CF(CF₃)-CF₂-O-CF=CF₂.

Suitable perfluoroalkyl vinyl monomers correspond to the general formula:

CF₂=CF-R^{d}_{f}

or

CH₂=CH-R^{d}_{f}

wherein R^{d}_{f} represents a perfluoroalkyl group of 1 to 10, preferably 1 to 5 carbon atoms. A typical example of a perfluoroalkyl vinyl monomer is hexafluoropropylene.

Specific examples of fluoropolymers include for example copolymers comprising a combination of monomers as follows: VDF-HFP, TFE-P, VDF-TFE-HFP, VDF-TFE-PVE, TFE-PVE, E-TFE-PVE it being understood that these polymers further include a chlorine containing monomer or otherwise include chlorine through the use of a chlorine containing initiator or chain transfer agent during their manufacturing. Particularly preferred are any of the aforementioned copolymers further including units derived from a chlorine containing monomer such as CTFE. Still further examples of suitable fluoropolymers include copolymers comprising a combination of monomers as in CTFE-P or CTFE-VDF.

At least one fluoropolymer in the composition for making the fluoroelastomer should contain chlorine atoms. The chlorine atoms may be introduced into the fluoropolymer during its manufacturing by using a chlorine containing initiator system, a chlorine containing chain transfer agent or by using a chlorine containing monomer. Suitable chlorine containing monomers include fluorinated as well as non-fluorinated monomers. Examples of fluorinated chlorine containing monomers include fluorinated C₂-C₈ olefins that further have one or more chlorine atoms such as chlorotrifluoroethylene (CTFE), 2-chloropentafluoropropene and dichlorodifluoroethylene and any of the aforementioned fluorinated monomers such as for example fluorinated vinyl ethers, in which one or more hydrogen or fluorine atoms are replaced with chlorine. Examples of chlorine containing non-fluorinated monomers that can be used include chlorinated C₂-C₈ olefins such as vinyl chloride and vinylidene chloride

Chlorine may further be introduced into the fluoropolymer in an end group of the fluoropolymer through the use of an appropriate initiator system or a suitable chain transfer agent. Initiator systems capable of introducing chlorine into the fluoropolymer include systems based on a free radical initiator and a chlorine source such as a chloride salt, e.g. sodium chloride or ammonium chloride or a free radical initiator that contains chlorine such as for example Cl(CF₂)ₙSO₂Na wherein n is a number of 1 to 10, for example 2 to 5. Suitable chain transfer agents that can introduce chlorine in the polymer include CCl₄, CH₂Cl₂, chloroform, Cl-CH₂COOC₂H₅ and CF₂ClBr.

The amount of chlorine contained in the fluoropolymer can vary widely and can be readily determined by one skilled in the art through routine experimentation. The amount of chlorine in the fluoropolymer is between 0.01% by weight and 15% by weight, preferably between 0.01% by weight and 10% by weight, more preferably between 0.1 % by weight and 8% by weight based on the weight of the fluoropolymer.

The chlorine containing fluoropolymer may further contain bromine and/or iodine atoms although such is not mandatory in the cure system of this invention. In order to introduce bromine/iodine along the chain, the copolymerization of the basic monomers of the fluoropolymer is carried out with a suitable fluorinated bromine or iodine containing cure-site monomer (see for instance U.S. Pat. Nos. 4,745,165, 4,831,085, and 4,214,060). Such comonomer can be selected for instance from:
(a) bromo- or iodo- (per)fluoroalkyl-perfluorovinylethers having the formula:

   Z-R_{f} -O-CF=CF₂

   wherein Z is Br or I, R_{f} is a (per)fluoroalkylene C₁-C₁₂, optionally containing chlorine and/or ether oxygen atoms; for example: BrCF₂-O-CF=CF₂, BrCF₂CF₂-O-CF=CF₂, BrCF₂CF₂CF₂-O-CF=CF₂, CF₃CFBrCF₂-O-CF=CF₂, and the like;
(b) bromo- or iodo (per)fluoroolefins such as those having the formula:

   Z'-R'_{f}-CF=CF₂

   wherein Z' is Br or I, R'_{f} is a (per)fluoroalkylene C₁-C₁₂, optionally containing chlorine atoms; for instance: bromotrifluoroethylene, 4-bromo-perfluorobutene-1, and the like; or bromofluoroolefins such as 1-bromo-2,2-difluoroethylene and 4-bromo-3,3,4,4-tetrafluorobutene-1;
(c) non-fluorinated bromo- olefins such as vinyl bromide and 4-bromo-1-butene;

In replacement of or in addition to a bromine or iodine containing cure site comonomer, the fluoropolymer can contain a cure site component having bromine or iodine in terminal position, deriving from a suitable chain transfer agent introduced in the reaction medium during the polymer preparation, as described in U.S. Pat. No. 4,501,869 or derived from a suitable initiator. Examples of useful initiators include X(CF₂)ₙSO₂Na with n=1 to 10 (where X is Br or I) or an initiator composition comprising ammonium persulfate and potassium bromide.

Examples of chain transfer agents include those having the formula R_{f}Brₓ, wherein R_{f} is a x-valent (per)fluoroalkyl radical C₁-C₁₂, optionally containing chlorine atoms, while x is 1 or 2. Examples include CF₂Br₂, Br(CF₂)₂Br, Br(CF₂)₄Br, CF₂ClBr, CF₃CFBrCF₂Br, and the like. Further examples of suitable chain transfer agents are disclosed in US 4,000,356.

The fluoropolymers for use in connection with the present invention can be made in accordance with any of the known polymerization methods for making fluoropolymers. Such methods include without limitation, aqueous emulsion polymerization, suspension polymerization and polymerization in an organic solvent.

The composition for making a fluoroelastomer also includes a free radical generating compound. By the term "free radical generating compound" is meant a compound that upon exposure to heat or actinic radiation such as for example UV, X-ray, β-ray radiation decomposes and thereby forms radicals. Typically, the free radical generating compound is a compound capable of initiating a free radical polymerization upon heating, a so called thermal initiator, or upon exposure to light, a so called photoinitiator. Examples of free radical generating compounds include for example persulfates such as ammonium persulfate alone or in combination with a suitable reducing agent such as a bisulfite or iron or copper; azo compounds such as for example azoisobutyronitrile.

In a preferred embodiment, the free radical generating compound is an organic peroxide. Suitable organic peroxides are those which generate free radicals at the desired curing temperatures. A dialkyl peroxide or a bis(dialkyl peroxide) which decomposes at a temperature above 50° C is especially preferred. In many cases it is preferred to use a di-tertiarybutyl peroxide having a tertiary carbon atom attached to peroxy oxygen. Among the most useful peroxides of this type are 2,5-dimethyl-2,5-di(tertiarybutylperoxy)hexyne-3 and 2,5-dimethyl-2,5- di(tertiarybutylperoxy)hexane. Other peroxides can be selected from such compounds as dicumyl peroxide, dibenzoyl peroxide, tertiarybutyl perbenzoate, α,α'-bis(t-butylperoxy-diisopropylbenzene), and di[1,3-dimethyl-3-(t-butylperoxy)-butyl]carbonate. Generally, about 1-3 parts of peroxide per 100 parts of fluoropolymer is used.

To obtain a curable composition, there should generally also be present a coagent which has one or more groups that are capable of participating in a free radical cure reaction. Preferably, a coagent is composed of a polyunsaturated compound which is capable of cooperating with the free radical generating compound and the organic compound having MH functions to provide a useful cure. These coagents can be added in an amount equal to 0.1 and 10 parts per hundred parts fluoropolymer, preferably between 2-5 parts per hundred parts fluoropolymer. Examples of useful coagents include triallyl cyanurate; triallyl isocyanurate; triallyl trimellitate; tri(methylallyl) isocyanurate; tris(diallylamine)-s-triazine; triallyl phosphite; N,N-diallyl acrylamide; hexaallyl phosphoramide; N,N,N',N'-tetraalkyl tetraphthalamide; N,N,N',N'-tetraallyl malonamide; trivinyl isocyanurate; 2,4,6-trivinyl methyltrisiloxane; N,N'-m-phenylenebismaleimide; diallyl-phthalate and tri(5-norbornene-2-methylene)cyanurate.

Particularly useful are triallyl isocyanurate and tri(methylallyl) isocyanurate. Other useful coagents include the bis-olefins disclosed in EPA 0 661 304 A1, EPA 0 784 064 A1 and EPA 0 769 521 A1.

According to a particular embodiment of the present invention, the composition for making a fluoroelastomer additionally comprises a polyhydroxy compound such that the composition may also be cured through a polyhydroxy cure system. In addition to the polyhydroxy compound, a polyhydroxy curing system generally also comprises one or more organo-onium accelerators in addition to the polyhydroxy compound. The organo-onium compounds useful in the present invention typically contain at least one heteroatom, i.e., a non-carbon atom such as N, P, S, O, bonded to organic or inorganic moieties and include for example ammonium salts, phosphonium salts and iminium salts. One class of quaternary organo-onium compounds useful in the present invention broadly comprises relatively positive and relatively negative ions wherein a phosphorus, arsenic, antimony or nitrogen generally comprises the central atom of the positive ion, and the negative ion may be an organic or inorganic anion (e.g., halide, sulfate, acetate, phosphate, phosphonate, hydroxide, alkoxide, phenoxide, bisphenoxide, etc.).

Many of the organo-onium compounds useful in this invention are described and known in the art. See, for example, U.S. Pat. Nos. 4,233,421 (Worm), 4,912,171 (Grootaert et al.), 5,086,123 (Guenthner et al.), and 5,262,490 (Kolb et al.), US 5,929,169, all of whose descriptions are herein incorporated by reference. Representative examples include the following individually listed compounds and mixtures thereof:
triphenylbenzyl phosphonium chloride
tributylallyl phosphonium chloride
tributylbenzyl ammonium chloride
tetrabutyl ammonium bromide
triaryl sulfonium chloride
8-benzyl-1,8-diazabicyclo [5,4,0]-7-undecenium chloride
benzyl tris(dimethylamino) phosphonium chloride
benzyl(diethylamino)diphenylphosphonium chloride
Another class of useful organo-onium compounds include those having one or more pendent fluorinated alkyl groups. Generally, the most useful fluorinated onium compounds are disclosed by Coggio et al. in U.S. Pat. No. 5,591,804.

The polyhydroxy compound may be used in its free or non-salt form or as the anionic portion of a chosen organo-onium accelerator. The crosslinking agent may be any of those polyhydroxy compounds known in the art to function as a crosslinking agent or co-curative for fluoroelastomers, such as those polyhydroxy compounds disclosed in U.S. Pat. Nos. 3,876,654 (Pattison), and 4,233,421 (Worm). Representative aromatic polyhydroxy compounds include any one of the following: di-, tri-, and tetrahydroxybenzenes, naphthalenes, and anthracenes, and bisphenols of the following formula: 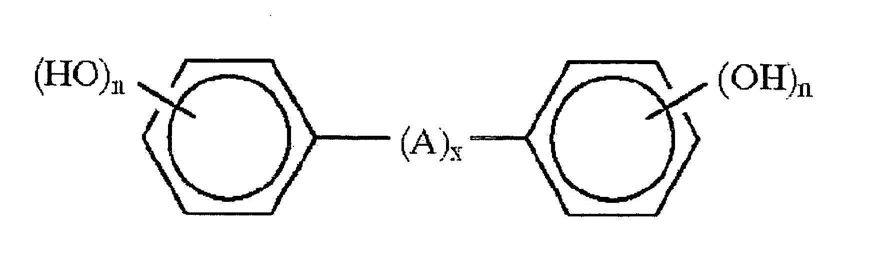 wherein A is a difunctional aliphatic, cycloaliphatic, or aromatic radical of I to 13 carbon atoms, or a thio, oxy, carbonyl, sulfonyl, or sulfonyl radical, A is optionally substituted with at least one chlorine or fluorine atom, x is 0 or 1, n is 1 or 2, and any aromatic ring of the polyhydroxy compound is optionally substituted with at least one atom of chlorine, fluorine, bromine, or with a carboxyl or an acyl radical (e.g., --COR where R is H or a C 1 to C8 alkyl, aryl, or cycloalkyl group) or alkyl radical with, for example, I to 8 carbon atoms. It will be understood from the above bisphenol formula that the --OH groups can be attached in any position (other than number one) in either ring. Blends of two or more of these compounds are also used.

One of the most useful and commonly employed aromatic polyphenols of the above formula is 4,4'-hexafluoroisopropylidenyl bisphenol, known more commonly as bisphenol AF. The compounds 4,4'-dihydroxydiphenyl sulfone (also known as Bisphenol S) and 4,4'-isopropylidenyl bisphenol (also known as bisphenol A) are also widely used in practice.

A composition based on polyhydroxy compounds may further include an acid acceptor. Acid acceptors can be inorganic or blends of inorganic and organic. Examples of inorganic acceptors include magnesium oxide, lead oxide, calcium oxide, calcium hydroxide, dibasic lead phosphite, zinc oxide, barium carbonate, strontium hydroxide, calcium carbonate, etc. Organic acceptors include epoxies, sodium stearate, and magnesium oxalate. The preferred acid acceptors are magnesium oxide and calcium hydroxide. The acid acceptors can be used singly or in combination, and preferably are used in amounts ranging from about 2 to 25 parts per 100 parts by weight of the fluoropolymer.

The composition for making the fluoroelastomer may contain further additives, such as carbon black, stabilizers, plasticizers, lubricants, inorganic or organic fillers such as for example polymeric fillers, and processing aids typically utilized in fluoropolymer compounding can be incorporated into the compositions of the present invention, provided they have adequate stability for the intended service conditions.

The compositions may be prepared by mixing the fluoropolymer, a cure composition and the organic compound having hydride function(s) and other additives in conventional rubber processing equipment. Such equipment includes rubber mills, internal mixers, such as Banbury mixers, and mixing extruders.

In accordance with an embodiment of the invention to obtain fluoroelastomers, a curable fluoroelastomer composition comprising the chlorine containing polymer, the organic compound having -SiH functions, a free radical generating compound such as an organic peroxide and a coagent having one or more groups capable of participating in a free radical cure reaction is provided. Such a composition may then be cured upon exposure to heat or actinic radiation such as UV radiation.

Preferably, a fluoroelastomer is obtained therefrom by heating the curable composition to obtain a desired level of curing. The curable compositions can be used to form articles. By the term "article" in connection with the present invention is meant a final article such as for example an O-ring as well as preforms from which a final shape is made, e.g. a tube from which a ring is cut. To form an article, the curable composition can be extruded using a screw type extruder or a piston extruder. Alternatively, the curable composition can be shaped into an article using injection molding, transfer molding or compression molding. Compression molding consists of placing a quantity of cold curable composition into a heated mold cavity and subsequently closing the mold using adequate pressure to shape the article. After retaining the rubber at sufficient temperature during sufficient time to allow vulcanization to proceed it can then be demolded. Injection molding is a shaping technique whereby the curable composition is first heated and masticated in an extruder screw then collected in a heated chamber from which it is then injected into a hollow mold cavity by means of a hydraulic piston. After vulcanization the article can then be demolded. Transfer molding is similar to injection molding with the difference being that the curable composition is not preheated and masticated by an extruder screw but introduced as a cold mass in the heated injection chamber. Typical vulcanization conditions for curable composition are elevated temperatures e.g. 160°C to 210°C, pressures above 7 bar and maintaining these conditions for 30 seconds, in fast injection molding processes to 5 minutes or longer for larger compression molded articles.

The fluoroelastomers that can be obtained with the invention can be used to make O-rings, gaskets, oil seals, diaphragms, hoses, rolls and sheeting materials. They can be used in a variety of industrial applications including automobiles, boats, aircraft, hydraulic machinery, general machinery, and in fields related to prevention of pollution. The fluoroelastomers of the invention are particularly useful in fuel management systems. Parts of the fuel management systems in which the fluoroelastomers can be used include fuel tanks, fuel hoses, in-tank hoses and filler hoses.

The fluoroelastomers of the present invention can furthermore be readily bonded to a variety of substrates including other elastomers such as non-fluorinated elastomers such as for example silicone rubbers or to layers of thermoplastic fluoropolymers. Thermoplastic fluoropolymers are typically polymers that are semi-crystalline, i.e they have a clear melting point, e.g. a melting point of more than 100°C, and they are preferably polymers that are processible from the melt. By 'processible from the melt' is meant that these polymers can processed by typical melt extrusion equipment. Layers of thermoplastic fluoropolymers are often used in fuel management systems as barrier layers for fuel. To effectively bond the thermoplastic fluoropolymer to the fluoroelastomer that are obtained with this invention, it will generally be desirable that the thermoplastic fluoropolymer is also a chlorine containing fluoropolymer or alternatively or additionally contains bromine or iodine as cure site components. Specific examples of thermoplastic fluoropolymers that may be used with this invention are copolymers having the following combination of monomers: CTFE-VDF; CTFE-TFE-HFP-VDF; CTFE-TFE-E; bromine or chlorine containing E-TFE copolymers and bromine or chlorine containing TFE-HFP-VDF copolymers.

To bond the fluoroelastomer to a substrate, a curable composition according to the invention can be provided on the surface of the substrate to which bonding is desired. Upon curing of the curable composition, bonding to the substrate can be achieved. If the substrate is a silicone rubber, the method of bonding may involve providing the curable composition on a silicone composition that upon curing will form a silicone rubber. By heating such a laminate, curing of both layers and bonding to each other may be effected simultaneously.

Various multi-layer articles can be made by bonding a fluoroelastomer obtained with this invention to other layers. For example, a multi-layer hose comprising the fluoroelastomer according to the invention as an innermost layer bonded to a silicone rubber may be obtained. Further, multi-layer construction such as for example in a fuel hose may be obtained wherein a fluorothermoplastic barrier layer is bonded to an innermost fluoroelastomer layer, the fluorothermoplastic barrier layer further being bonded to a non-fluorinated plastic or elastomer.

The invention is further illustrated with reference to the following examples. All parts are by weight unless otherwise indicated

### EXAMPLES

### Abbreviations:

VDF: vinylidene fluoride
HFP: hexafluoropropylene
CTFE: chlorotrifluoroethylene
TFE: tetrafluoroethylene
Varox® DBPH-50: 50% 2,5 dimethyl 2,5 di(t-butylperoxide)hexane on a CaCO₃ carrier.
N-990: Carbon black commercially available as Cabot N-990
TAIC: Triallylisocyanurate, added as a 72% dry-liquid concentrate as commercially available from Harwick
TMAIC: Trimethylallylisocyanurate
P-0660: Phenyltris(dimethylsiloxy)silane) ((C₆H₅)Si(OSi[CH₃]₂H)

Polymer "A": polymer with the composition (by weight) of 44% VDF, 21 % TFE, 27% HFP, and 8% CTFE. This polymer has a Mooney viscosity (ML 1+10 at 121°C) as per ASTM D1646 of approximately 35.

Polymer "B" : polymer with a composition (by weight) of 55% VDF and 45% CTFE. This polymer has a Mooney viscosity (ML 1+10 at 121 C) as per ASTM D1646 in excess of 150.

Using polymer A or B, the formulations set forth in table 1 were prepared by compounding the polymers with the additives as indicated in table 1 on a two-roll mill.

The resulting compounds were tested in a Monsanto MDR as per ASTM D 2084-81 for curability at 177°C for 12 minutes using 0.5 degree arc and 100 cycles per minute. Sheets were pressed out at 177°C for 10 minutes (Press Cure) and then further cured in an oven at 230°C for 16 hours (Post Cure), and each were tested in a Monsanto T-2000 Tensometer as per ASTM D 412. O-Rings were pressed at 177°C for 10 minutes and post cured at 230°C for 16 hours and tested for Compression Set at 200°C for 70 hours, all as per ASTM D395-89. Data on these tests can be found in the table 1 below.

**Table 1**

| | Example number | | | | | | | |
|---|---|---|---|---|---|---|---|---|
| | 1* | 1A | 1B | 2* | 2A | 2B | 3* | 3A |
| Polymer "A" | 100 | 100 | 100 | 100 | 100 | 100 | | |
| Polymer "B" | | | | | | | 100 | 100 |
| N-990 | 30 | 30 | 30 | 30 | 30 | 30 | 30 | 30 |
| Ca(OH)2 | 3 | 3 | 3 | 3 | 3 | 3 | 3 | 3 |
| DBPH-50 | 2.5 | 2.5 | 2.5 | 3.5 | 3.5 | 3.5 | 2.5 | 2.5 |
| TAIC (72%) | 3.5 | 3.5 | 3.5 | | | | 3.5 | 3.5 |
| TMAIC | | | | 2.5 | 2.5 | 2.5 | | |
| P-0660 | | | 1 | | | 2.7 | | 2 |
| Triphenylsilane | | 2 | | | 2 | | | |

| MDR | | | | | | | | |
|---|---|---|---|---|---|---|---|---|
| ML (Nm) | 0.08 | 0.08 | 0.08 | 0.07 | 0.07 | 0.05 | 0.69 | 0.62 |
| MH (Nm) | 0.27 | 1.37 | 0.78 | 0.60 | 1.74 | 1.83 | 2.08 | 2.53 |
| delta (Nm) | 0.19 | 1.29 | 0.70 | 0.53 | 1.67 | 1.79 | 1.39 | 1.91 |
| ts2 (min) | -- | 0.6 | 0.7 | 4.7 | 1.8 | 1.8 | 0.2 | 0.2 |
| t'50 (min) | 0.9 | 0.8 | 0.8 | 5.2 | 3.5 | 3.2 | 0.7 | 0.7 |
| t'90 (min) | 2.1 | 1.5 | 1.6 | 9.4 | 7.4 | 6.3 | 2.2 | 1.4 |
| tan delta | 0.71 | 0.16 | 0.26 | 0.35 | 0.09 | 0.07 | 0.08 | 0.03 |

| Press Cure, 177C 10' as per ASTM D-412 | | | | | | | | |
|---|---|---|---|---|---|---|---|---|
| Tensile (MPa) | NR | 8.9 | 4.2 | NR | 12.9 | 15.6 | 17.9 | 22.7 |
| Elongation (%) | NR | 300 | 460 | NR | 350 | 270 | 250 | 160 |
| Modulus (MPa) | NR | 2.4 | 1.3 | NR | 1.9 | 2.9 | 2.9 | 8.4 |
| Duro, Shore "A" | NR | 69 | 57 | NR | 67 | 68 | 66 | 69 |

| Post Cure, 230C 16 hr as per ASTM D-412 | | | | | | | | |
|---|---|---|---|---|---|---|---|---|
| Tensile (MPa) | NR | 9.9 | 5.2 | NR | 16.9 | 21.0 | 213 | 31.5 |
| Elongation (%) | NR | 220 | 330 | NR | 270 | 240 | 210 | 170 |
| Modulus (MPa) | NR | 3.2 | 2.0 | NR | 3.5 | 4.3 | 4.3 | 10.8 |
| Duro, Shore "A" | NR | 74 | 68 | NR | 79 | 73 | 69 | 72 |

| Comp Set, 200C/70hr (O-Ring) as per ASTM D395-89 | | | | | | | | |
|---|---|---|---|---|---|---|---|---|
| O-Ring (%) | NR | 34 | 65 | NR | 32 | 26 | 24 | 9 |

| | | | | | | | | |
|---|---|---|---|---|---|---|---|---|
| * comparative examples | | | | | | | | |

As can be appreciated from the above table by comparing example 1 with 1A or 1B and example 2 with 2B or 2C, the addition of the organic hydride containing compound (silane) results in a curable composition that yields a fluoroelastomer having comparable to those described in the prior art that use bromine or iodine as a cure site component. Absent the organic hydride containing compound, polymer A which does not include bromine or iodine, cannot be cured to a fluoroelastomer (see comparative examples 1 and 2). Comparing examples 3 and 3A shows further that the addition of a silane improves several physical properties of an elastomer resulting from a composition that includes fluoropolymer B. The improved physical properties include:
- Higher final torque (MH) and delta torque in curing,
- Faster t'90
- Lower tan delta,
- Higher tensile and modulus in Press Cure and Post Cure,
- Greatly improved Compression Set.

## Claims

1. A composition for making a fluoroelastomer comprising:
(a) a fluoropolymer containing chlorine in an amount of 0.01% to 15% by weight based on the weight of the fluoropolymer; and
(b) an organic compound, wherein said organic compound is a siloxane having one or more -SiH functions.

2. A composition according to claim 1 wherein said composition comprises a free radical generating compound and a coagent having one or more groups capable of participating in a free radical cure reaction.

3. A composition according to any of claims 1 to 2 wherein said organic compound is a polymeric compound and said hydride function is comprised in a terminal group and/or comprised in a repeating unit of said polymeric compound.

4. A composition according to claim 1 wherein said organic compound is a siloxane having one or more -OSiH groups.

5. A composition according to any of claims 1 to 2 wherein said organic compound is a siloxane that corresponds to the formula:
(R^{a})ₛ(R^{b}O)ₜSiH_{w}
wherein each R^{a} independently represents an alkyl group or an aryl group each of which may optionally be substituted, each R^{b} independently represents an alkyl group which may optionally be substituted, w represents a value of 1 to 3, s and t are 0 to 3 and the sum of s+t+w is 4.

6. A composition according to any of claims 1 to 2 wherein said organic compound is a polysiloxane corresponding to the formula: 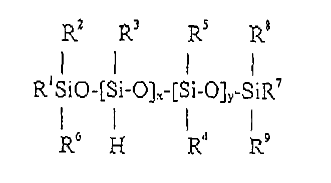 wherein R¹, R², R³, R⁶, R⁷, R⁸ and R⁹ each independently represents hydrogen, an alkoxy group, an alkyl group which may optionally be substituted or aryl group which may optionally be substituted, R⁴ and R⁵ each independently represents an alkoxy group, an alkyl which may optionally be substituted or aryl group which may optionally be substituted, x represents a value of 0 to 150, y represents a value of 0 to 150 and with the proviso that when x=0, at least one of R¹, R², R⁶, R⁷, R⁸ and R⁹ represents a hydrogen atom.

7. A composition according to any of claims 1 to 2 wherein said organic compound is a disiloxane or a cyclic polysiloxane.

8. A composition according to any of claims 1 to 2 wherein said organic compound is a cyclic siloxane corresponding to the formula: 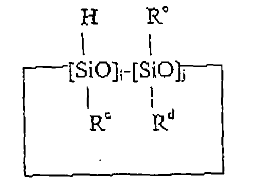 wherein R^{c} represents hydrogen, an alkyl group which may optionally be substituted or an aryl group which may optionally be substituted, R^{d} and R^{e} each independently represents an alkyl which may optionally be substituted or aryl group which may optionally be substituted, i is at least 1 and the sum of i+j is at least 3.

9. A composition according to any of claims 1 to 8 wherein said fluoropolymer further comprises bromine and/or iodine.

10. A composition according to any of the previous claims wherein said fluoropolymer is a copolymer comprising repeating units derived from a fluorinated monomer and a monomer having one or more chlorine atoms.

11. A composition according to claim 10 wherein said monomer having one or more chlorine atoms is a fluorinated monomer having one or more chlorine atoms.

12. A composition according to claim 10 wherein said monomer having one or more chlorine atoms is selected from the group consisting of vinyl chloride, vinylidene chloride and a fluoroofefin having one or more chlorine atoms.

13. A composition according to claim 10 wherein said fluoropolymer is a copolymer of tetrafluoroethylene and/or vinylidene fluoride and a fluorolefin having one or more chlorine atoms and optionally one or more monomers selected from the group consisting of C₃-C₈ fluorinated olefins, fluorinated vinyl ethers, fluorinated allyl ethers, ethylene and propylene.

14. A composition according to any of claims 2 to 10 wherein said free radical generating compound comprises an organic peroxide and said coagent is a polyunsaturated organic compound.

15. A composition according to claim 14 wherein said coagent is selected from the group consisting of triallyl-cyanurate, triallyl-isocyanurate, triallyl trimellitate, tris(diallylamino)-s-triazine, triallyl-phosphite, N,N-diallylacrylamide, hexaallyl-phosphoramide, N, N'-m phenylenebismaleimide, diallyl-phthalate and tri(5-norbornene-2-methylene)-cyanurate.

16. A composition according to claim 14 or 15 wherein said fluoropolymer comprises one of more halogens on a terminating group, said halogens being capable of participating in an organic peroxide cure reaction.

17. A fluoroelastomer composition derivable from the curing of a composition of any of claims 2 to 16.

18. Shaped article comprising the fluoroelastomer composition of claim 1.

19. Multi-layer article comprising a layer of a fluoroelastomer derivable from curing of the composition of any of claims 2 to 16.

20. Multi-layer article according to claim 19 wherein said layer of said fluoroelastomer is bonded to a layer of thermoplastic fluoropolymer.

21. Multi-layer article according to claim 20 wherein said thermoplastic fluoropolymer comprises chlorine, bromine and/or iodine.

22. Multi-layer article according to claim 19 wherein said layer of said fluoroelastomer is bonded to a silicone rubber.

## Patentansprüche

1. Zusammensetzung zur Herstellung eines Fluorelastomers, umfassend:
(a) ein Fluorpolymer, das Chlor in einer Menge von 0,01 Gew.% bis 15 Gew.% enthält, bezogen auf das Gewicht des Fluorpolymers, und
(b) eine organische Verbindung, wobei die organische Verbindung ein Siloxan mit einer oder mehreren -SiH Funktionen ist.

2. Zusammensetzung nach Anspruch 1, wobei die Zusammensetzung eine Radikale erzeugende Verbindung und ein Co-Agens mit einer oder mehreren Gruppen umfasst, die an einer radikalischen Härtungsreaktion teilnehmen können.

3. Zusammensetzung nach einem der Ansprüche 1 bis 2, wobei die organische Verbindung eine polymere Verbindung ist und die Hydridfunktion in einer endständigen Gruppe vorliegt und/oder in einer sich wiederholenden Einheit der polymeren Verbindung vorliegt.

4. Zusammensetzung nach Anspruch 1, wobei die organische Verbindung ein Siloxan mit einer oder mehreren -OSiH Gruppen ist.

5. Zusammensetzung nach einem der Ansprüche 1 bis 2, wobei die organische Verbindung ein Siloxan ist, das der folgenden Formel entspricht:
(R^{a})ₛ(R^{b}O)ₜSiH_{w}
wobei jedes R^{a} unabhängig für eine Alkylgruppe oder eine Arylgruppe steht, die jeweils gegebenenfalls substituiert sein können, jedes R^{b} unabhängig für eine Alkylgruppe steht, die gegebenenfalls substituiert sein kann, w für einen Wert von 1 bis 3 steht, s und t 0 bis 3 sind und die Summe von s+t+w 4 ist.

6. Zusammensetzung nach einem der Ansprüche 1 bis 2, wobei die organische Verbindung ein Polysiloxan ist, das der folgenden Formel entspricht: 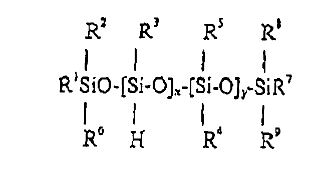 wobei R¹, R², R³, R⁶, R⁷, R⁸ und R⁹ jeweils unabhängig für Wasserstoff, eine Alkoxygruppe, eine Alkylgruppe, die gegebenenfalls substituiert sein kann, oder Arylgruppe, die gegebenenfalls substituiert sein kann, steht, R⁴ und R⁵ jeweils unabhängig für eine Alkoxygruppe, ein Alkyl, das gegebenenfalls substituiert sein kann, oder eine Arylgruppe steht, die gegebenenfalls substituiert sein kann, x für einen Wert von 0 bis 150 steht, y für einen Wert von 0 bis 150 steht und mit der Maßgabe, dass, wenn x = 0 ist, mindestens eines von R¹, R², R⁶, R⁷, R⁸ und R⁹ für ein Wasserstoffatom steht.

7. Zusammensetzung nach einem der Ansprüche 1 bis 2, wobei die organische Verbindung ein Disiloxan oder ein cyclisches Polysiloxan ist.

8. Zusammensetzung nach einem der Ansprüche 1 bis 2, wobei die organische Verbindung ein cyclisches Siloxan ist, das der folgenden Formel entspricht: 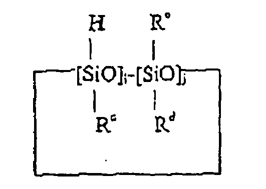 wobei R^{c} für Wasserstoff, eine Alkylgruppe, die gegebenenfalls substituiert sein kann, oder eine Arylgruppe steht, die gegebenenfalls substituiert sein kann, R^{d} und R^{e} jeweils unabhängig für ein Alkyl, das gegebenenfalls substituiert sein kann, oder eine Arylgruppe steht, die gegebenenfalls substituiert sein kann, i mindestens 1 ist und die Summe von i+j mindestens 3 ist.

9. Zusammensetzung nach einem der Ansprüche 1 bis 8, wobei das Fluorpolymer ferner Brom und/oder Iod umfasst.

10. Zusammensetzung nach einem der vorhergehenden Ansprüche, wobei das Fluorpolymer ein Copolymer ist, das sich wiederholende Einheiten umfasst, die von einem fluorierten Monomer und einem Monomer mit einem oder mehreren Chloratomen abgeleitet sind.

11. Zusammensetzung nach Anspruch 10, wobei das Monomer mit einem oder mehreren Chloratomen ein fluoriertes Monomer mit einem oder mehreren Chloratomen ist.

12. Zusammensetzung nach Anspruch 10, wobei das Monomer mit einem oder mehreren Chloratomen aus der Gruppe bestehend aus Vinylchlorid, Vinylidenchlorid und einem Fluorolefin mit einem oder mehreren Chloratomen ausgewählt ist.

13. Zusammensetzung nach Anspruch 10, wobei das Fluorpolymer ein Copolymer von Tetrafluorethylen und/oder Vinylidenfluorid und einem Fluorolefin mit einem oder mehreren Chloratomen und gegebenenfalls einem oder mehreren Monomeren ausgewählt aus der Gruppe bestehend aus fluorierten C₃-C₈-Olefinen, fluorierten Vinylethern, fluorierten Allylethern, Ethylen und Propylen ist.

14. Zusammensetzung nach einem der Ansprüche 2 bis 10, wobei die Radikale erzeugende Verbindung ein organisches Peroxid umfasst und das Co-Agens eine mehrfach ungesättigte organische Verbindung ist.

15. Zusammensetzung nach Anspruch 14, wobei das Co-Agens aus der Gruppe bestehend aus Triallylcyanurat, Triallylisocyanurat, Triallyltrimellitat, Tris(diallylamino)-s-triazin, Triallylphosphit, N,N-Diallylacrylamid, Hexaallylphosphoramid, N,N'-m-Phenylenbismaleimid, Diallylphthalat und Tri(5-norbornen-2-methylen)-cyanurat ausgewählt ist.

16. Zusammensetzung nach Anspruch 14 oder 15, wobei das Fluorpolymer ein oder mehrere Halogene an einer endständigen Gruppe umfasst, wobei die Halogene an einer Härtungsreaktion mit organischem Peroxid teilnehmen können.

17. Fluorelastomerzusammensetzung, die aus dem Härten einer Zusammensetzung nach einem der Ansprüche 2 bis 16 abgeleitet werden kann.

18. Geformter Gegenstand, umfassend die Fluorelastomerzusammensetzung nach Anspruch 1.

19. Mehrschichtiger Gegenstand, umfassend eine Schicht eines Fluorelastomers, das aus dem Härten der Zusammensetzung nach einem der Ansprüche 2 bis 16 abgeleitet werden kann.

20. Mehrschichtiger Gegenstand nach Anspruch 19, wobei die Schicht des Fluorelastomers an eine Schicht des thermoplastischen Fluorpolymers gebondet ist.

21. Mehrschichtiger Gegenstand nach Anspruch 20, wobei das thermoplastische Fluorpolymer Chlor, Brom und/oder Iod umfasst.

22. Mehrschichtiger Gegenstand nach Anspruch 19, wobei die Schicht des Fluorelastomers an einen Silikonkautschuk gebondet ist.

## Revendications

1. Composition pour la fabrication d'un fluoroélastomère, comprenant :
(a) un fluoropolymère renfermant du chlore en une quantité de 0,01 % à 15 % en poids, par rapport au poids du fluoropolymère ; et
(b) un composé organique, où ledit composé organique est un siloxane renfermant une ou plusieurs fonctions -SiH.

2. Composition selon la revendication 1, où ladite composition comprend un composé générant des radicaux libres et un co-agent renfermant un ou plusieurs groupes capables de participer à une réaction de durcissement radicalaire.

3. Composition selon l'une quelconque des revendications 1 à 2, dans laquelle ledit composé organique est un composé polymère et ladite fonction hydrure est comprise dans un groupe terminal et/ou comprise dans un motif récurrent dudit composé polymère.

4. Composition selon la revendication 1, dans laquelle ledit composé organique est un siloxane renfermant un ou plusieurs groupes -OSiH.

5. Composition selon l'une quelconque des revendications 1 à 2, dans laquelle ledit composé organique est un siloxane qui correspond à la formule:
(R^{a})ₛ(R^{b}O)ₜSiH_{w}
dans laquelle chaque R^{a} représente indépendamment un groupe alkyle ou un groupe aryle, dont chacun peut être éventuellement substitué, chaque R^{b} représente indépendamment un groupe alkyle qui peut être éventuellement substitué, w vaut de 1 à 3, s et t valent de 0 à 3 et la somme de s+t+w vaut 4.

6. Composition selon l'une quelconque des revendications 1 à 2, dans laquelle ledit composé organique est un polysiloxane correspondant à la formule : 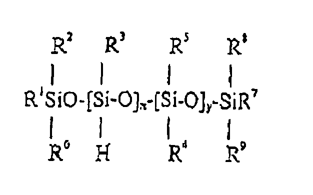 dans laquelle R¹, R², R³, R⁶, R⁷, R⁸ et R⁹ représentent chacun indépendamment un atome d'hydrogène, un groupe alcoxy, un groupe alkyle qui peut être éventuellement substitué ou un groupe aryle qui peut être éventuellement substitué, R⁴ et R⁵ représentent chacun indépendamment un groupe alcoxy, un groupe alkyle qui peut être éventuellement substitué ou un groupe aryle qui peut être éventuellement substitué, x vaut de 0 à 150, y vaut de 0 à 150 et à condition que lorsque x vaut 0, au moins l'un parmi R¹, R², R⁶, R⁷, R⁸ et R⁹ représente un atome d'hydrogène.

7. Composition selon l'une quelconque des revendications 1 à 2, dans laquelle ledit composé organique est un disiloxane ou un polysiloxane cyclique.

8. Composition selon l'une quelconque des revendications 1 à 2, dans laquelle ledit composé organique est un siloxane cyclique correspondant à la formule : 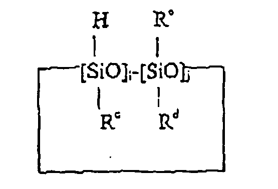 dans laquelle R^{c} représente un atome d'hydrogène, un groupe alkyle qui peut être éventuellement substitué ou un groupe aryle qui peut être éventuellement substitué, R^{d} et R^{e} représentent chacun indépendamment un groupe alkyle qui peut être éventuellement substitué ou un groupe aryle qui peut être éventuellement substitué, i vaut au moins 1 et la somme de i+j vaut au moins 3.

9. Composition selon l'une quelconque des revendications 1 à 8, dans laquelle ledit fluoropolymère renferme en outre du brome et/ou de l'iode.

10. Composition selon l'une quelconque des revendications précédentes, dans laquelle ledit fluoropolymère est un copolymère renfermant des motifs récurrents dérivés d'un monomère fluoré et d'un monomère renfermant un ou plusieurs atomes de chlore.

11. Composition selon la revendication 10, dans laquelle ledit monomère renfermant un ou plusieurs atomes de chlore est un monomère fluoré renfermant un ou plusieurs atomes de chlore.

12. Composition selon la revendication 10, dans laquelle ledit monomère renfermant un ou plusieurs atomes de chlore est choisi parmi le groupe constitué du chlorure de vinyle, du chlorure de vinylidène et d'une fluoro-oléfine renfermant un ou plusieurs atomes de chlore.

13. Composition selon la revendication 10, dans laquelle ledit fluoropolymère est un copolymère de tétrafluoroéthylène et/ou de fluorure de vinylidène et d'une fluoro-oléfine renfermant un ou plusieurs atomes de chlore et éventuellement d'un ou de plusieurs monomères choisis parmi le groupe constitué d'oléfines fluorées en C₃-C₈, d'éthers vinyliques fluorés, d'éthers allyliques fluorés, de l'éthylène et du propylène.

14. Composition selon l'une quelconque des revendications 2 à 10, dans laquelle ledit composé générant des radicaux libres comprend un peroxyde organique et ledit co-agent est un composé organique polyinsaturé.

15. Composition selon la revendication 14, dans laquelle ledit co-agent est choisi parmi le groupe constitué du cyanurate de triallyle, de l'isocyanurate de triallyle, du triméllitate de triallyle, de la tris(diallylamino)-s-triazine, du phosphite de triallyle, du N,N-diallylacrylamide, de l'hexaallylphosphoramide, du N,N'-m-phénylènebismaléimide, du phtalate de diallyle et du tris(5-norbornène-2-méthylène)-cyanurate.

16. Composition selon la revendication 14 ou 15, dans laquelle ledit fluoropolymère renferme un ou plusieurs atomes d'halogène sur un groupe de terminaison, lesdits atomes d'halogène étant capables de participer à une réaction de durcissement au peroxyde organique.

17. Composition de fluoroélastomère pouvant provenir du durcissement d'une composition selon l'une quelconque des revendications 2 à 16.

18. Article mis en forme comprenant la composition de fluoroélastomère selon la revendication 1.

19. Article multi-couche comprenant une couche d'un fluoroélastomère pouvant provenir du durcissement de la composition selon l'une quelconque des revendications 2 à 16.

20. Article multi-couche selon la revendication 19, dans lequel ladite couche dudit fluoroélastomère est liée à une couche de fluoropolymère thermoplastique.

21. Article multi-couche selon la revendication 20, dans lequel ledit fluoropolymère thermoplastique renferme du chlore, du brome et/ou de l'iode.

22. Article multi-couche selon la revendication 19, dans lequel ladite couche dudit fluoroélastomère est liée à un caoutchouc siliconé.
